(19) Europäisches Patentamt
European Patent Office
Office européen des brevets

(11) EP 3 032 476 A1

(12) # EUROPÄISCHE PATENTANMELDUNG

(43) Veröffentlichungstag:
**15.06.2016 Patentblatt 2016/24**

(51) Int Cl.:
***G06Q 10/10*** *(2012.01)*

(21) Anmeldenummer: **15197605.7**

(22) Anmeldetag: **02.12.2015**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(30) Priorität: **09.12.2014 DE 102014018205**

(71) Anmelder: **Unify GmbH & Co. KG**
**81379 München (DE)**

(72) Erfinder:
- **Totzke, Jürgen**
  **85586 Poing (DE)**
- **Klug, Karl**
  **83714 Miesbach (DE)**

(74) Vertreter: **Fritzsche, Thomas**
**Fritzsche Patent**
**Naupliastraße 110**
**81545 München (DE)**

(54) **KONFERENZSYSTEM UND VERFAHREN ZUM STEUERN DES KONFERENZSYSTEMS**

(57) Die Erfindung betrifft ein Konferenzsystem (10) und ein Verfahren zum Steuern des Konferenzsystems (10), umfassend folgende Schritte:
- ein einem Organisator als erstem Konferenzteilnehmer zugeordnetes Konferenzorganisator-Endgerät (20) und mindestens zwei Teilnehmer-Endgeräte (22 - 26), von denen jedes einem jeweiligen weiteren Konferenzteilnehmer zugeordnet ist, registrieren sich zur Einleitung einer Konferenz beim Konferenzsystem (10),
- das Konferenzorganisator-Endgerät (20) und die Teilnehmer-Endgeräte (22 - 26) führen die Konferenz mit dem Ziel aus, durch die Meinungsäußerungen der Konferenzteilnehmer eine Entscheidung über ein bestimmtes Thema herbeizuführen, und
- das Konferenzorganisator-Endgerät (20) beendet die Konferenz, vorzugsweise erst nach Erreichen des Ziels.

Das Verfahren zeichnet sich dadurch, dass das Konferenzsystem (10)
- durch eine Analyse der Meinungsäußerungen der Konferenzteilnehmer eine momentane Entscheidungssituation berechnet, und
- die momentane Entscheidungssituation an das Konferenzorganisator-Endgerät (20) überträgt.

EP 3 032 476 A1

## Beschreibung

Die vorliegende Erfindung betrifft ein Verfahren zum Steuern eines Konferenzsystems gemäß Anspruch 1, ein entsprechendes Computerprogrammprodukt gemäß Anspruch 7, einen maschinenlesbaren Datenträger gemäß Anspruch 8 mit darauf gespeichertem Computerprogrammprodukt sowie ein Konferenzsystem gemäß Anspruch 9.

Durch die Globalisierung des Geschäftslebens nimmt die Nutzung von Konferenzsystemen, welche für Telefon- und Videokonferenzen benötigt werden, immer mehr zu. Hierbei sind die Konferenzteilnehmer häufig geografisch verteilt angeordnet. Neben der Durchführung von "reinen" Video- oder Audiokonferenzen kommt es auch zu Mischformen dieser Anwendungen, indem - beispielsweise dann, wenn einer oder mehrere Konferenzteilnehmer unterwegs sind und dennoch an der Konferenz teilnehmen möchten, aber nur einen begrenzten Datenverkehr zur Verfügung haben - Teilnehmer nur den Audiokanal nutzen, um an einer Videokonferenz teilzunehmen. Im Gegensatz zu einer Konferenz, bei der alle Teilnehmer anwesend sind, ist die Vorstellung der Konferenzsituation hinsichtlich der Teilnahme und der Agierenden schwierig. Dies führt häufig zu einer unerwünschten Verlängerung derartiger Konferenzen und zu einer Belegung der damit verbundenen Systemressourcen, wie insbesondere Nutzung der entsprechenden Konferenzsysteme sowie der damit verbundenen Energie- und Telekommunikationskosten. Zur Unterstützung der Teilnahmeerfahrung in solchen Telekonferenzen (nachfolgend kurz nur als Konferenzen bezeichnet), kann beispielsweise durch Sprecheridentifikation visualisiert werden, welcher Teilnehmer gerade spricht. Beispielsweise können die Teilnehmer in einem virtuellen Besprechungsraum angeordnet werden, so dass bei Audiokonferenzen die Orientierung erleichtert wird, wer gerade spricht.

Es sind verschiedene Techniken bekannt, um das Durchführen von Telefon- oder Videokonferenzen zu erleichtern. So offenbart die EP 1 271 341 A2 ein System zum Analysieren von Textdaten, um insbesondere Informationen, die in Textdaten verborgen sind, darzustellen, um beispielsweise Kunden bestimmte Waren zielgenauer anbieten zu können.

Ferner zeigt die WO 2013/086301 A1 ein Telefonkonferenzzugangssystem, bei dem Teilnehmer computerunterstützt zu einer gemeinsamen Telefonkonferenz zusammengebracht werden. Das System beinhaltet eine Einheit, mit der aus Anmerkungen von Teilnehmern, die diese in Textform eingegeben hatten, ein möglicherweise erlangter Konsens herausgefiltert werden kann.

US 2012/0323575 A1 zeigt ein System, mit dem der Inhalt der Aussage eines Sprechers visuell repräsentiert werden kann und mit dem gegebenenfalls auch die Stimmung bzw. Emotionen des Inhalts der Aussage des Sprechers erfasst und dargestellt werden können.

FR 2949894 A1 offenbart ein System, mit dem die Höflichkeit eines Sprechers, beispielsweise in einer Fernsehdiskussion, erfasst und dargestellt werden kann.

Ziel einer Konferenz ist es häufig, dass eine oder mehrere Entscheidungen zu bestimmten Themen getroffen werden sollen. Im Verlauf einer derartigen Konferenz bilden sich häufig unterschiedlichste Konstellationen von Koalitionen von Befürwortern, Gegnern oder sich neutral verhaltenden Personen unter den Teilnehmern aus, die sich auch im Laufe der Konferenz noch verändern können. Am Ende kann auch ein einstimmiger Konsens entstehen. Es kann auch vorkommen, dass einige Teilnehmer nicht oder nicht rechtzeitig zu Wort kommen und daher die Konferenz ineffizient verläuft, was in der Regel in eine unnötige Verlängerung der Dauer der Konferenz mündet.

Keine der vorstehend genannten Druckschriften kann einem Organisator oder Moderator einer Konferenz bei der Lösung der gesprochenen Probleme helfen.

Der Erfindung liegt somit die Aufgabe zugrunde, ein Konferenzsystem und ein Verfahren zur Steuerung des Konferenzsystems vorzuschlagen, womit die Nutzererfahrung bei Telekonferenzen verbessert wird und insbesondere der Organisator und/oder Moderator bei der Findung eines Konsenses oder der Feststellung einer Mehrheitsbildung der Teilnehmer unterstützt werden sollen, was demzufolge auch eine effizientere Nutzung der durch das Konferenzsystem beanspruchten Ressourcen bedeutet.

Diese Aufgabe wird gelöst mit einem - computerimplementierten - Verfahren gemäß Anspruch 1, einem Computerprogramm bzw. Computerprogrammprodukt gemäß Anspruch 7, einem maschinenlesbaren Datenträger gemäß Anspruch 8 mit darauf gespeichertem Computerprogramm sowie einem Konferenzsystem gemäß Anspruch 9. Vorteilhafte Weiterbildungen der Erfindung sind Gegenstand der abhängigen Ansprüche.

Bei einem erfindungsgemäßen Verfahren zum Steuern eines Konferenzsystems werden folgende Schritte ausgeführt: ein Konferenzorganisator-Endgerät (das einem Organisator und/oder Moderator zugeordnet ist, der einen ersten Konferenzteilnehmer darstellt) registriert sich (z. B. über eine Adresserfassung) bei dem Konferenzsystem, um eine Konferenz einzuleiten. Des Weiteren registrieren sich weitere (mindestens zwei) Teilnehmer-Endgeräte, von denen jedes einem entsprechenden weiteren Konferenzteilnehmer zugeordnet ist, beim Konferenzsystem. Die jeweiligen Endgeräte leiten die jeweiligen Sprach- und/oder Bilddaten der ihnen zugeordneten Teilnehmer an das Konferenzsystem weiter und stellen die entsprechenden Sprach- und Bilddaten der anderen Konferenzteilnehmer dar, damit sie der Konferenz folgen können. Das erfindungsgemäße Verfahren ist dafür ausgelegt, dass über das Thema, das der Anlass der Konferenz ist, auf der Grundlage der Meinungsäußerung der Konferenzteilnehmer eine Entscheidung herbeigeführt wird und der Organisator mittels seines Konferenzorganisator-Endgeräts die Konferenz beenden kann. Das erfindungsgemäße Verfahren zeichnet sich dadurch aus, dass das Konferenzsystem durch eine Analyse der in Form von Audio- und/oder Videosignalen erfolgenden Meinungsäußerungen der Konferenzteilnehmer eine momentane Entscheidungssituation berechnet und die momentane Entscheidungssituation an das Konferenzorganisator-Endgerät - optional auch an weitere Endgeräte - überträgt.

Somit ermöglicht es das erfindungsgemäße Verfahren dem Organisator der Konferenz, jederzeit eine Information über die momentane bzw. aktuelle Entscheidungssituation zu besitzen und damit die Konferenz zu einem frühestmöglichen Zeitpunkt erfolgreich beenden zu können. Hierbei werden soziale, nicht-technische Informationen und Situationen mittels technischer Verfahren in eine verifizierbare Nutzererfahrung für den Organisator umgesetzt, die sonst nur in seiner Vorstellung geschaffen würde. Diese Nutzererfahrung geht in der Regel über die menschliche Erfassungsmöglichkeit der Entscheidungssituation hinaus. Demzufolge kann die Nutzung der für das Führen der Konferenz erforderlichen Ressourcen auf ein Minimum beschränkt werden. Auch für die Planung zukünftiger Konferenzen kann das erfindungsgemäße Verfahren mit Vorteil eingesetzt werden.

Gemäß einer vorteilhaften Weiterbildung des erfindungsgemäßen Verfahrens zeichnet das Konferenzsystem die Meinungsäußerungen der Konferenzteilnehmer auf und setzt sie durch Transkription in analysierbare Daten, beispielsweise in geschriebenen Text, um. Danach kann das Konferenzsystem aus diesen analysierbaren Daten die momentane Entscheidungssituation ableiten.

Um auch der Tatsache Rechnung zu tragen, dass Meinungsäußerungen bei einer derartigen Konferenz durchaus auch ironisch oder scherzhaft erfolgen können und somit möglicherweise das Gegenteil des scheinbar Gesagten bedeuten können, kann das Konferenzsystem eine Erfassung der Stimmung der jeweiligen Konferenzteilnehmer bei der Abgabe ihrer Meinungsäußerung durchführen, um den wahren Inhalt der jeweiligen Meinungsäußerung zu ermitteln und in die Berechnung der momentanen Entscheidungssituation einfließen zu lassen.

Gemäß einer vorteilhaften Weiterbildung des erfindungsgemäßen Verfahrens berechnet das Konferenzsystem für jeden einzelnen Konferenzteilnehmer einen kumulierten gewichteten Positionswert, der die momentane Entscheidungsposition des betreffenden Konferenzteilnehmers bezeichnet, und gewichtet bzw. berücksichtigt bei der Berechnung des kumulierten gewichteten Positionswerts ältere, also zeitlich weiter zurückliegende, Meinungsäußerungen schwächer als jüngere (zeitlich weniger weit zurückliegende) Meinungsäußerungen. Somit bleibt die vom erfindungsgemäßen Verfahren ermittelte momentane Entscheidungssituation bei Änderungen von Meinungen einzelner oder mehrerer Konferenzteilnehmer, die sich in Meinungsäußerungen niederschlagen, aktuell.

Eine besonders vorteilhafte Ausgestaltung des erfindungsgemäßen Verfahrens ergibt sich, wenn die aktuelle Koalitionsbildung der Teilnehmer mit Konsens graphisch dargestellt wird, optional mit einer Indikation der Veränderung von Positionen der einzelnen Teilnehmer. Weiter können optional auch die zwischenzeitichen Koalitionsbildungen als Historie gespeichert und abgerufen werden. Neben dieser graphischen Übersichtsdarstellung können die aktuelle Periode und die kumulierten Perioden alternierend auch als Statistik, beispielsweise in Form von Balkendiagrammen, dargestellt werden. Dabei wird die Position jeweils einzelner Teilnehmer zu den jeweiligen anderen Teilnehmern ermittelt und ggf. gesondert dargestellt.

Dazu kann folgende Formel verwendet werden.

$$s_{nm} = \sum_{j=1}^{c} a_{nmj} * b_{nmj}$$

mit $s_{nm}$ als die Summe evaluierter Dialoge von Person n bezüglich Person m innerhalb der betrachteten Periode. Dialoge werden in der betrachteten Periode von Person n bezüglich Person m bewertet ($a_{nm}$). Bei der Bewertung wird jeder Beitrag auf Zustimmung, Neutralität oder Ablehnung ausgewertet.

$$a = \begin{cases} +1 \ \textit{bei zustimmender Aussage} \\ -1 \ \textit{bei ablehnender Aussage} \\ 0 \ \textit{bei unentschlossen} \end{cases}$$

Beiträge mit ironischem Charakter werden entsprechend umgekehrt gewertet ($b_{nm}$).

$$b = \begin{cases} -1 \ \textit{bei ironischer Aussage} \\ +1 \ \textit{bei neutraler Aussage} \end{cases}$$

c bestimmnt die Anzahl an Dialogen von Person n bezüglich Person m in betrachteter Periode.

Bei der Ermittlung des kumulierten, gewichteten Positionswertes werden die aktuellen Bewertungen gegenüber älteren beispielsweise durch Anwendung der Formel übergewichtet, mit *i* fortlaufende, beendete Periode und *k* = max. Anzahl iterierter Perioden. Je älter die Periode evaluierter Dialoge von Person n bezüglich Person m, je größer ist der Gewichtungsfaktor im Nenner des Summanden und entsprechend kleiner ist der Summenbeitrag.

$$v_{nm} = \sum_{i=1}^{k} \frac{s_{nm}[i]}{k-(i+1)}$$

Eine besondere Erleichterung für den Organisator und/oder für einen eventuell vorhandenen Moderator der Konferenz stellt es dar, wenn die momentane Entscheidungssituation auf seinem Endgerät visualisiert wird, wobei es ihm bzw. ihnen zusätzlich hilft, wenn die Darstellung für jeden einzelnen der Konferenzteilnehmer gesondert erfolgt, um deren Standpunkt bzw. die Veränderung des Standpunkts zu erfassen und über den Zeitverlauf mit verfolgen zu können. Selbstverständlich kann die Visualisierung zusätzlich auch auf anderen Endgeräten erfolgen.

Das der Erfindung zugrundeliegende Problem wird außerdem gelöst mit einem Konferenzsystem gemäß Anspruch 9, das ein einem Organisator als einem ersten Konferenzteilnehmer zugeordnetes Konferenzorganisator-Endgerät, mindestens zwei Teilnehmer-Endgeräte, von denen jedes einem jeweiligen weiteren Konferenzteilnehmer zugeordnet ist, und eine Steuerungseinheit zum Registrieren der verschiedenen Endgeräte umfasst. Erfindungsgemäß ist die Steuerungseinheit so ausgestaltet, dass sie das vorstehend beschriebene Verfahren computerimplementiert ausführt.

Gemäß einer besonders vorteilhaften Ausführungsform des erfindungsgemäßen Konferenzsystems weist dieses mindestens eine der folgenden Einrichtungen auf:

- eine Medien-Aufzeichnungseinheit zum Aufzeichnen der im Zuge der Konferenz generierten Audio- und/oder Videosignale,
- eine Teilnehmer-Erkennungseinheit zum Identifizieren der Teilnehmer anhand der von der Medien-Aufzeichnungseinheit gelieferten Audio- und Videosignale,
- eine Transkriptionseinheit zum Transkribieren der von der Medien-Aufzeichnungseinheit gelieferten Audio- und/oder Videosignale,
- eine Dialogerfassungseinheit zum Erfassen von Dialogen zwischen Konferenzteilnehmern und einzelnen Redebeiträgen von Konferenzteilnehmern durch Auswertung der transkribierten Audio- und/oder Videosignale,
- eine Textanalyseeinheit zum Analysieren der transkribierten Audio- und/oder Videosignale bezüglich zustimmender, ablehnender und neutraler Meinungsäußerungen,
- eine Stimmungserfassungseinheit zum Analysieren der transkribierten Audio- und/oder Videosignale für das Erfassen von Stimmungen von Konferenzteilnehmern,
- eine Visualisierungseinheit zum Erzeugen einer visuellen Darstellung der aktuellen Entscheidungssituation auf dem Konferenzorganisator-Endgerät, und
- eine Iterierungseinheit zum Durchführen zusätzlicher Iterationen bei der Ermittlung der aktuellen Entscheidungssituation.

Zur vorliegenden Erfindung wird auch ein Computerprogramm bzw. Computerprogrammprodukt gemäß Anspruch 7, sowie ein maschinenlesbarer Datenträger gemäß Anspruch 8, auf dem ein solches Computerprogramm gespeichert ist, angesehen.

Erfindungsgemäß können somit durch Adresserfassung, Bilderkennung und/oder Sprechererkennung die Anwesenheit der Teilnehmer als Ausgangssituation der Konferenz erfasst werden. Die Äußerungen bzw. Meinungsäußerungen der beteiligten Personen werden technisch erfasst und unter Anwendung der vorstehend dargestellten Metriken und Semantiken ausgewertet. Die Dialoge werden während der Konferenz chronologisch erfasst und durch Transkription - gegebenenfalls auch Übersetzung - als Text bereitgestellt. Der resultierende Text kann einer Analyse unterzogen werden, in der die zustimmenden und ablehnenden Äußerungen im Bezug zum Vorredner oder durch eine persönliche Ansprache wie beispielsweise einer Namensnennung einer dritten Person erkannt werden. Durch Stimmungsanalyse - auch als Sentiment Detection bezeichnet - können darüber hinaus ernstgemeinte von ironischen oder scherzhaften Bemerkungen unterschieden werden. Nach einiger Zeit der diskursiven Diskussion ergibt sich in der Regel eine Entscheidungssituation (die auch als Koalition bezeichnet werden könnte), die beispielsweise anhand einer größeren Sprechpause ablesbar und über die letzten zustimmenden oder ablehnenden Wortmeldungen der Teilnehmer erkennbar wird.

Gemäß einer Ausprägung des erfindungsgemäßen Verfahrens wird zunächst die Gesamtheit der Teilnehmer ermittelt und die fortlaufende Konferenzdauer gemessen. Sprechbeiträge der einzelnen Teilnehmer sowie andere deutbare Artikulationen dieser Teilnehmer (beispielsweise Murmeln oder Seufzen) werden gezählt und ins Verhältnis zu den jeweils anderen Teilnehmern gesetzt. Diese Messungen werden mittels Textanalyse und Stimmungserfassung entweder als zustimmend oder ablehnend qualifiziert. Es kann vorgesehen sein, dass längere Sprechpausen der Teilnehmer eine Neuberechnung der Entscheidungssituation hervorruft bzw. triggert. Alternativ kann dies durch Interaktion durch den Organisator und/oder den Moderator der Konferenz an ihren jeweiligen Endgeräten ausgelöst werden. Der Organisator und/oder der Moderator können beispielsweise auch die Auswertung der Entscheidungssituation zurücksetzen, falls ein weiterer Tagesordnungspunkt begonnen wird. Gemäß einer weiteren Ausprägung des erfindungsgemäßen Verfahrens weist das Konferenzsystem durch Erkennung von Schlüsselwörtern, die den Abschluss des vorangegangenen oder den Übergang zum nächsten Themenabschnitt signalisieren, auf den betreffenden Endgeräten hin.

Vorzugsweise beinhaltet das erfindungsgemäße Verfahren eine begleitende Visualisierung der momentanen bzw. aktuellen Entscheidungssituation zumindest auf dem Endgerät des Organisators (das beispielsweise stationär oder mobil sein kann), sowie gegebenenfalls auf weiteren Endgeräten von Teilnehmern. Die gewählte Visualisierung kann dabei entweder sehr einfach sein, beispielsweise nur entsprechende Texte, oder über Fotos bzw. Avatare bis hin zum Videobild reichen, und diese Visualisierung kann mithilfe der erkannten Entscheidungs- bzw. Koalitionssituation eine Anordnung der Teilnehmer entsprechend ihrer Koalitionsposition innerhalb einer Gruppendarstellung ergeben und entsprechend dargestellt werden. Teilnehmer, die sich nur neutral verhalten, werden beispielsweise als separate Gruppe oder Individuen dargestellt. Sie können somit vom Organisator gezielt angesprochen und beispielsweise um Meinungsäußerung gebeten werden. Erfindungsgemäß berechnet das erfindungsgemäße Verfahren die momentane Entscheidungssituation und damit auch das Vorhandensein einer Konsensbildung, was in einer effizienteren Konferenz resultiert.

Größere Verschiebungen von Koalitionsbildungen können auch im chronologischen Verlauf dokumentiert werden, was der Organisator der Konferenz (oder falls gewünscht auch ein anderer Teilnehmer) individuell abrufen kann. Zusätzlich kann die Historie der Konferenz oder eine Situation zu einem bestimmten Zeitpunkt als zusätzliche Information zu den Transkriptionen oder der Medienaufzeichnung im Konferenzsystem hinterlegt werden und beim Abspielen zeitgerecht beigefügt werden. Außerdem kann eine begleitende Statistik hinsichtlich einer Beteiligung der jeweiligen Teilnehmer angefertigt werden und eine Metrik zur Effizienz der Besprechung liefern, was insbesondere für den Organisator oder einen Moderator der Konferenz hilfreich sein kann.

Weitere Vorteile, Merkmale und Besonderheiten der vorliegenden Erfindung ergeben sich aus der nachfolgenden Beschreibung vorteilhafter Ausführungsformen unter Bezugnahme auf die Zeichnung. Es zeigen schematisch:

- Fig. 1 eine Übersicht über eine Ausführungsform eines erfindungsgemäßen Konferenz-systems,
- Fig. 2 eine Darstellung einer Ausführungsform einer Konsenserkennungseinheit gemäß der Erfindung,
- Fig. 3 eine Ausführungsform des erfindungsgemäßen Verfahrens zum Steuern einer Konferenz,
- Fig. 4 ein Beispiel einer Statistik einer Konsenserkennung bei einer Konferenz, und
- Fig. 5 ein Visualisierungsbeispiel für die erfindungsgemäße Konsenserkennung bei einer Konferenz.

Gemäß Fig. 1 umfasst eine Ausführungsform eines erfindungsgemäßen Konferenzsystems 10 eine Konsenserkennungseinheit 30 mit einer darin befindlichen Steuerungseinheit 32 als zentraler Instanz sowie ein (Konferenz-)Organisator-Endgerät 20 und mehrere Teilnehmer-Endgeräte 22 - 26, die an eine Medienaufzeichnungseinheit 12 angekoppelt sind, welche die von den Endgeräten 20 und 22 - 26 kommenden Mediendaten, insbesondere Audio- und Videodaten, aufzeichnet und an die Konsenserkennungseinheit 30 weiterleitet.

In Fig. 2 ist die Konsenserkennungseinheit 30 in Verbindung mit der Medienaufzeichnungseinheit 12 detaillierter dargestellt. Die von der Medienaufzeichnungseinheit 12 aufgenommenen Daten der einzelnen Konferenzteilnehmer (wozu natürlich auch der Organisator mit dem ihm zugeordneten Organisator-Endgerät 20 gehört) werden an eine Teilnehmererkennungseinheit 34 übermittelt, welche die entsprechenden Teilnehmer der übermittelten Audio- und Videosignale identifiziert. Die Audio- und Videosignale werden dann an eine Transkriptionseinheit 36 geliefert, welche diese Signale transkribiert, um Textdaten zu erhalten. Die Ergebnisse dieser Transkription werden in einer Datenbank 31 gespeichert, um bei Bedarf sofort abgerufen werden zu können. Die Transkriptionseinheit 36 ist mit einer (zentralen) Steuerungseinheit 32 verbunden, welche die komplette Konsenserkennungseinheit 30 sowie gegebenenfalls das vollständige Konferenzsystem 10 steuert.

Mit der Transkriptionseinheit 36 sind mehrere Einrichtungen verbunden, welche die transkribierten Audio- und Videosignale nutzen: eine Dialogerfassungseinheit 38, welche die Dialoge zwischen Konferenzteilnehmern sowie einzelne Redebeiträge von Konferenzteilnehmern und deren Anzahl und Länge erfasst, indem sie die transkribierten Audio- und Videosignale analysiert, eine Textanalyseeinheit 40 (auch als Keyword-Spotter bezeichnet), welche die Texte auf zustimmende, ablehnende und neutrale Meinungsäußerungen durchsucht, selbst wenn sich diese in komplexeren Redewendungen befinden, und eine Stimmungserfassungseinheit 42, welche die transkribierten Audio- und Videosignale daraufhin untersucht, ob darin enthaltene zustimmende oder ablehnende Meinungsäußerungen eventuell ironisch oder scherzhaft gemeint sind und beispielsweise in Wahrheit genau das Gegenteil bedeuten sollen oder nur als einschränkend zustimmend bzw. ablehnend angesehen werden sollten.

Unter Verwendung der transkribierten Audio- und Videosignale errechnet die Steuerungseinheit 32 eine momentane, aktuelle Entscheidungssituation, welche für jeden der beteiligten Konferenzteilnehmer darstellt, wie seine Entscheidungsposition bezüglich des zu entscheidenden Themas ist. Mit dieser Steuerungseinheit 32 ist eine Visualisierungseinheit 46 verbunden, die eine visuelle Darstellung der momentanen Entscheidungssituation generiert und auf dem Organisator-Endgerät 20 zur Darstellung bringt. Außerdem ist eine Iterierungseinheit 48 mit der Steuerungseinheit 32 verbunden, die zusätzliche Iterationen bei der Ermittlung der aktuellen bzw. momentanen Entscheidungssituation initiieren bzw. in Auftrag geben kann.

Anhand von Fig. 3 soll nun ein typischer Verlauf einer Konferenz, wie sie durch das erfindungsgemäße Verfahren gesteuert wird, dargestellt werden. In einem Schritt S10 wird die Konferenz gestartet, indem sich der Organisator mit seinem Organisator-Endgerät 20 sowie mindestens zwei weitere Teilnehmer mit deren Endgeräten 22, 23, ... registriert haben. In einem Schritt S12 leitet die Iterierungseinheit 48 eine erste Runde der Ermittlung des Konsenses ein. Der Ausdruck "Form." bei Schritt S12 bedeutet, dass bei einer neuen Konferenz oder einem Themenwechsel sozusagen ein neues Formular zur Aufnahme der gemessenen Metadaten, Metriken und Statistiken angelegt wird. In einem Schritt S14 werden die von den Endgeräten 20, 22 - 26 kommenden Medien (Audio- und/oder Videosignale) aufgezeichnet, wonach sie in einem Schritt S16 einer Teilnehmer-/Sprechererkennung unterzogen werden. In einem anschließenden Schritt S18 wird die Dauer der jeweiligen Dialoge ermittelt. Danach wird in einem Schritt S22 die Transkription mit Metadaten hinsichtlich Sprecher, Dauer, zustimmende/ablehnende und ggf. ironische Äußerung gegenüber einem Vorredner oder einem angesprochenen Teilnehmer angereichert. In einem Schritt S30 werden die transkribierten Audio- und Videosignale einer Textanalyse unterzogen, um zustimmende, ablehnende und neutrale Meinungsäußerungen herauszufiltern. In einem folgenden Schritt S32 wird geprüft, ob die Teilnehmer bereits zum nächsten Thema übergegangen sind. Falls dies nicht der Fall ist, wird in Schritt S34 entschieden, dass in Schritt S36 eine Stimmungserfassung ausgeführt wird, um ernstgemeinte Meinungsäußerungen von ironischen und/oder scherzhaft gemeinten Meinungsäußerungen unterscheiden und entsprechend bewerten zu können. Anschließend wird in einem Schritt S40 ein gewichteter Positionswert berechnet, der die momentane Entscheidungssituation wiedergibt, und an den Organisator und/oder Moderator der Konferenz übermittelt. Falls der Organisator die Konferenz beenden möchte (was in einem Schritt S41 überprüft wird), weil er durch die ihm übermittelten Informationen hinsichtlich des gewichteten Positionswerts bzw. der aktuellen Entscheidungssituation das Thema für entscheidungsreif hält, trifft bzw. verkündet er diese Entscheidung und beendet in einem Schritt S42 das Ende der Konferenz. Falls der Organisator die Konferenz weiterführen möchte, kann er in einem Schritt S50 die nächste Iteration einleiten und in einem Schritt S52 die Ansicht auf seinem Endgerät 20 aktualisieren lassen. Das Verfahren geht dann bei Schritt S12 in der beschriebenen Weise weiter.

Falls sich in Schritt S34 ergibt, dass die Konferenz bereits zum nächsten Thema übergegangen ist, geht das Verfahren zu Schritt S12 und leitet eine neue Iteration ein, um das neue Thema zu diskutieren. Es ist klar, dass in jeglichem Fall die Medienaufzeichnung (Schritt S14) so lange weitergeführt wird, wie es erforderlich ist.

Zu Beginn der Audio-/Videokonferenz werden also zunächst die Teilnehmer erkannt ,und es sind üblicherweise noch keine Koalitionen bzw. Entscheidungssituationen erkennbar. Typischerweise erfolgt nach der Vorstellungsrunde und einer Darlegung von Positionen eine erste Diskussion. Eine Aufzeichnung der anfallenden Audio- und Videosignale (Medien) mit gleichzeitiger oder unmittelbar folgender Transkription erlaubt die Analyse der durch die Transkription entstandenen Texte nach unterstützenden Meinungsäußerungen ("Ich stimme [meinem Vorredner] zu, ...", "Genau", ...) oder ablehnenden Meinungsäußerungen ("Das kann ich nicht nachvollziehen", "Da bin ich anderer Ansicht", "Können Sie das bitte nochmals erläutern...") bzw. Redewendungen in der Textanalyseeinheit 40 (auch Keyword-Spotter genannt). Es ist von Vorteil, wenn hierbei auch die Stimmungserfassungseinheit 42 verwendet wird, um die Ernsthaftigkeit bzw. Relevanz der getroffenen Änderungen realistisch einschätzen zu können.

Bezieht sich die Position nicht auf den Vorredner, sondern auf eine andere Person aus der Konferenz, so wird diese in der Regel vorab mit Namen adressiert ("Ich stimme eher der Position von Dick zu ..."), und auf diese Weise können diese Positionen ebenfalls in die Bewertung der momentanen bzw. aktuellen Entscheidungssituation eingehen. Nach einer Weile, wenn eine signifikante Anzahl an Teilnehmern eine Meinungsäußerung abgegeben haben, kann aufgrund der Positionen eine erste Koalitionsbildung bzw. Konsensbildung dargestellt werden, wie es beispielhaft in Fig. 5 angegeben ist.

Nach einer Sprechpause und weiteren Meinungsäußerungen wird die Darstellung gegebenenfalls aktualisiert. Gemäß Fig. 5 ist der Moderator John durch die Konferenzorganisation bzw. Moderation bekannt, ebenso wie der Organisator Dick (der typischerweise derjenige ist, der ein Anliegen hat und die Konferenz organisiert hat). Die Visualisierungseinheit 46 erhält diese Informationen vom Konferenzsystem 10 zum Start mitgeteilt. Es ist selbstverständlich klar, dass der Moderator und der Organisator auch in einer Personalunion auftreten können. Gemäß Beispiel in Fig. 5 haben sich nur Mary und Dick zu einer gemeinsamen Position verbunden, während John, Evelyn und Thomas die gegenteilige Meinung vertreten. Die Position von Mike bleibt mangels Beteiligung unklar. Diese Situation ist auf der linken Seite von Fig. 5 dargestellt. Im Lauf der Diskussion schließt sich Mary der unveränderten Position von John an, während sich Thomas und Evelyn von Dick überzeugen lassen. Die Position von Mike dagegen bleibt weiterhin unklar. Diese Situation ist auf der rechten Seite von Fig. 5 dargestellt. Bei Personen, die ihre Meinung bzw. Position geändert hatten, ist dies mit einem Doppelpfeil gekennzeichnet. Das erfindungsgemäße System kann beispielsweise auch auf die Darstellung von Mike verzichten, oder es kann als weitere Option dessen Unentschlossenheit nur dem Moderator und/oder Organisator explizit darstellen. Auf diese Weise könnte John als Moderator Mike gezielt zu seiner Meinung ansprechen, um eine entsprechende Meinungsäußerung zu erhalten.

Das erfindungsgemäße Verfahren kann in Zusammenhang mit dem erfindungsgemäßen System somit zu effizienten Besprechungen bzw. Telekonferenzen beitragen, wenn es zum Beispiel frühzeitig einen Konsens bzw. Mehrheiten für das Anliegen des Organisators unter den Teilnehmern signalisiert. Der Moderator kann dies nutzen, um das Ergebnis festzustellen und dann die Konferenz zu einem sehr frühen Zeitpunkt zu beenden, wenn es zu seiner Zusammenfassung keinen weiteren Widerspruch mehr gibt. Dies schont erfindungsgemäß die für die Durchführung einer Telekonferenz erforderlichen Ressourcen.

Die Dialogerfassungseinheit 38 registriert die Anzahl der Wortmeldungen und gegebenenfalls auch die Redezeit pro Teilnehmer, den Wechsel an Positionen, die Beteiligungsquote etc. Erfindungsgemäß kann diese Statistik fortlaufend und/oder abschließend dargestellt werden, wobei gegebenenfalls diese Ansicht nur dem Moderator und/oder dem Organisator zur Verfügung gestellt werden kann. Eine Statistik der letzten Periode von Dialogen ist als Beispiel in Fig. 4 dargestellt. Die Balkendiagramme sind jeweils aus Sicht eines Teilnehmers in Bezug auf die anderen Teilnehmer dargestellt, wobei positive Zahlen überwiegend zustimmende Positionen und negative Zahlen überwiegend ablehnende Positionen darstellen. In der Übersicht ist in einfacher Weise erkenntlich, dass innerhalb des letzten Dialogs Konsens zwischen dem Organisator Dick und dem Moderator John sowie mit den Teilnehmern Evelyn und Thomas vorliegt, während die Teilnehmer Harry und Mary gegenteilige Meinungen zum Rest der Teilnehmer einnehmen. Der Teilnehmer Mike hat sich an diesem Dialog nicht beteiligt.

Gemäß einer vorteilhaften Ausprägung der Erfindung ist das Verfahren so ausgelegt, dass sich im Laufe der Konferenz die Positionen festigen bzw. konvergieren. Hierzu werden die letzten Wortbeiträge sukzessive beim gewichteten Positionswert jeweils höher gewichtet als die älteren Wortbeiträge. Somit können diese Metriken eine Bewertung der Besprechungseffizienz ermöglichen.

Es ist ersichtlich, dass die vorliegende Erfindung verschiedenste Verfahrens- und Vorrichtungsmerkmale aufweist, die miteinander verknüpft sind. Daher ist klar, dass die Verfahrensschritte bzw. -merkmale eine Entsprechung bei den jeweiligen Vorrichtungen bzw. Einheiten des Konferenzsystems finden, und auch umgekehrt finden die unterschiedlichsten Vorrichtungsmerkmale eine Entsprechung in jeweiligen Verfahrensschritten bzw. Verfahrensmerkmalen, auch wenn dies nicht ausdrücklich so beschrieben ist.

Es ist festzuhalten, dass die unter Bezug auf die dargestellten Ausführungsformen beschriebenen Merkmale der Erfindung, wie beispielsweise die Art und Ausgestaltung einzelner Verfahrensschritte und Analysemethoden, wie insbesondere einzelne Analyseparameter und -einheiten, auch bei anderen Ausführungsformen vorhanden sein können, außer wenn es anders angegeben ist oder sich aus technischen Gründen von selbst verbietet. Von derartigen, in Kombination beschriebenen, Merkmalen einzelner Ausführungsformen müssen außerdem nicht notwendigerweise immer alle Merkmale in einer betreffenden Ausführungsform realisiert sein.

Bezugszeichenliste

| | |
|---|---|
| 10 = | Konferenzsystem |
| 12 = | Medienaufzeichnungseinheit |
| 20 = | Konferenzorganisator-Endgerät |
| 22 - 26 = | Teilnehmer-Endgeräte |
| 30 = | Konsenserkennungseinheit |
| 31 = | Datenbank |
| 32 = | Steuerungseinheit |
| 34 = | Teilnehmererkennungseinheit |
| 36 = | Transkriptionseinheit |
| 38 = | Dialogerfassungseinheit |
| 40 = | Textanalyseeinheit |
| 42 = | Stimmungserfassungseinheit |
| 46 = | Visualisierungseinheit |
| 48 = | Iterierungseinheit |
| 90 = | Datenträger |
| 92 = | Computerprogrammprodukt |
| S10 - S52 = | Verfahrensschritte |

## Patentansprüche

1. **1.** Verfahren zum Steuern eines Konferenzsystems (10), umfassend folgende Schritte:

   - ein einem Organisator als erstem Konferenzteilnehmer zugeordnetes Konferenzorganisator-Endgerät (20) und mindestens zwei Teilnehmer-Endgeräte (22 - 26), von denen jedes einem jeweiligen weiteren Konferenzteilnehmer zugeordnet ist, registrieren sich zur Einleitung einer Konferenz beim Konferenzsystem (10),
   - das Konferenzorganisator-Endgerät (20) und die Teilnehmer-Endgeräte (22 - 26) führen die Konferenz mit dem Ziel aus, durch die Meinungsäußerungen der Konferenzteilnehmer eine Entscheidung über ein bestimmtes Thema herbeizuführen, und
   - das Konferenzorganisator-Endgerät (20) beendet die Konferenz, vorzugsweise erst nach Erreichen des Ziels,

   **dadurch gekennzeichnet, dass** das Konferenzsystem (10)

   - durch eine Analyse der Meinungsäußerungen der Konferenzteilnehmer eine momentane Entscheidungssituation berechnet, und
   - die momentane Entscheidungssituation an das Konferenzorganisator-Endgerät (20) überträgt.

**2.** Verfahren nach Anspruch 1,
**dadurch gekennzeichnet, dass** das Konferenzsystem (10) die Meinungsäußerungen der Konferenzteilnehmer aufzeichnet und durch Transkription in analysierbare Daten umsetzt, wonach das Konferenzsystem (10) aus den analysierbaren Daten die momentane Entscheidungssituation ableitet.

**3.** Verfahren nach Anspruch 2,
**dadurch gekennzeichnet, dass** das Konferenzsystem (10) eine Erfassung der Stimmung der jeweiligen Konferenzteilnehmer bei ihren Meinungsäußerungen durchführt.

**4.** Verfahren nach einem der vorhergehenden Ansprüche,
**dadurch gekennzeichnet, dass** das Konferenzsystem (10) für jeden einzelnen Konferenzteilnehmer *n* einen kumulierten gewichteten Positionswert $v_{nm}$ berechnet, der die momentane Entscheidungsposition des betreffenden Konferenzteilnehmers *n* bezeichnet, wobei in die Berechnung des kumulierten gewichteten Positionswerts zeitlich weiter zurückliegende Meinungsäußerungen schwächer gewichtet werden als zeitlich weniger weit zurückliegende Meinungsäußerungen.

**5.** Verfahren nach Anspruch 4,
**dadurch gekennzeichnet, dass** der kumulierte gewichtete Positionswert $v_{nm}$ für jeden Konferenzteilnehmer *n* bezüglich eines anderen Konferenzteilnehmers m nach folgender Formel berechnet wird:

$$v_{nm} = \sum_{i=1}^{k} \frac{s_{nm}[i]}{k-(i+1)}$$

wobei

$$s_{nm} = \sum_{j=1}^{c} a_{nmj} * b_{nmj}$$

mit:

*n, m* = Dialog von Person n mit Person m
*i* = fortlaufende, beendete Periode
*k* = max. Anzahl iterierter Perioden

$j$ = fortlaufender Dialog innerhalb einer Periode
c = fortlaufende Dialoge von Person n bezüglich Person m in betrachteter Periode
$s_{nm}$ = Summe evaluierter Dialoge von Person n bezüglich Person m in betrachteter Periode
$a_{nmj}$ = zustimmende oder ablehnende Aussage von Person n bezüglich Person m in Dialog j
$b_{nmj}$ = ironische Aussage von Person n bezüglich Person m in Dialog j

$$a = \begin{cases} +1 & bei\ zustimmender\ Aussage \\ -1 & bei\ ablehnender\ Aussage \\ 0 & bei\ unentschlossen \end{cases}$$

$$b = \begin{cases} -1 & bei\ ironischer\ Aussage \\ +1 & bei\ neutraler\ Aussage \end{cases}$$

**6.** Verfahren nach einem der vorhergehenden Ansprüche,
**dadurch gekennzeichnet, dass** die momentane Entscheidungssituation, vorzugsweise für jeden der Konferenzteilnehmer, auf dem Konferenzorganisator-Endgerät (20) visualisiert wird.

**7.** Computerprogrammprodukt (92) zur Durchführung des Verfahrens gemäß einem der vorhergehenden Ansprüche.

**8.** Maschinenlesbarer Datenträger (90) mit darauf gespeichertem Computerprogrammprodukt (92) gemäß Anspruch 7.

**9.** Konferenzsystem (10), umfassend:

- ein einem Organisator als einem ersten Konferenzteilnehmer zugeordnetes Konferenzorganisator-Endgerät (20),
- mindestens zwei Teilnehmer-Endgeräte (22 - 26), von denen jedes einem jeweiligen weiteren Konferenzteilnehmer zugeordnet ist, und
- eine Steuerungseinheit (32), zum Registrieren des Konferenzorganisator-Endgeräts (20) und der Teilnehmer-Endgeräte (22 - 26),

**dadurch gekennzeichnet, dass** die Steuerungseinheit (32) so ausgestaltet ist, dass sie das Verfahren gemäß einem der Ansprüche 1 bis 6 ausführen kann.

**10.** Konferenzsystem (10) nach Anspruch 9,
**dadurch gekennzeichnet, dass** es mindestens eine der folgenden Einrichtungen aufweist:

- eine Medien-Aufzeichnungseinheit (12) zum Aufzeichnen der im Zuge der Konferenz generierten Audio- und/oder Videosignale,
- eine Teilnehmer-Erkennungseinheit (34) zum Identifizieren der Teilnehmer anhand der von der Medien-Aufzeichnungseinheit (12) gelieferten Audio- und Videosignale,
- eine Transkriptionseinheit (36) zum Transkribieren der von der Medien-Aufzeichnungseinheit (12) gelieferten Audio- und/oder Videosignale,
- eine Dialogerfassungseinheit (38) zum Erfassen von Dialogen zwischen Konferenzteilnehmern und einzelnen Redebeiträgen von Konferenzteilnehmern durch Auswertung der transkribierten Audio- und/oder Videosignale,
- eine Textanalyseeinheit (40) zum Analysieren der transkribierten Audio- und/oder Videosignale bezüglich zustimmender, ablehnender und neutraler Meinungsäußerungen,
- eine Stimmungserfassungseinheit (42) zum Analysieren der transkribierten Audio- und/oder Videosignale für das Erfassen von Stimmungen von Konferenzteilnehmern,
- eine Visualisierungseinheit (46) zum Erzeugen einer visuellen Darstellung der aktuellen Entscheidungssituation auf dem Konferenzorganisator-Endgerät (20), und
- eine Iterierungseinheit (48) zum Durchführen zusätzlicher Iterationen bei der Ermittlung der aktuellen Entscheidungssituation.

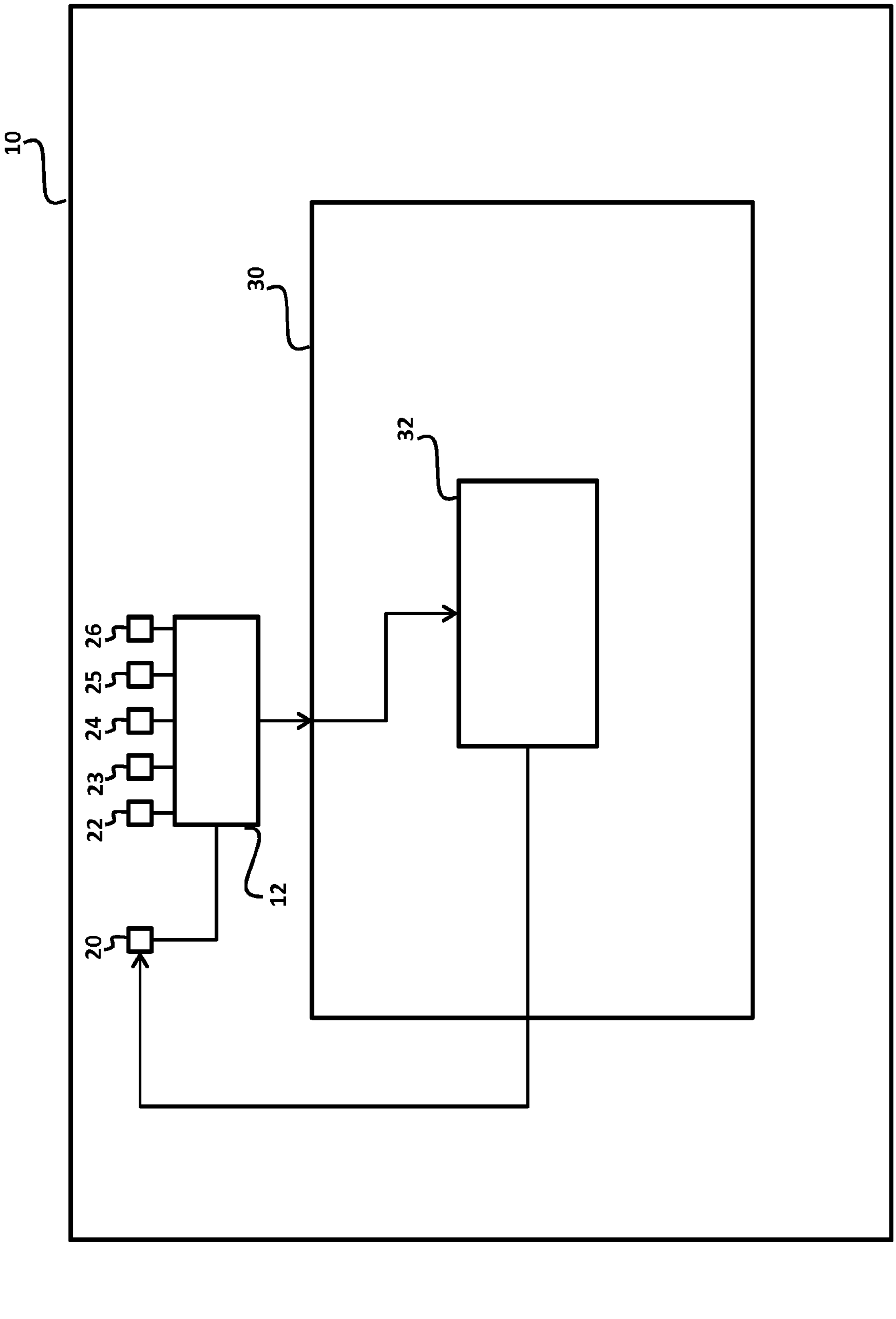


FIG. 1

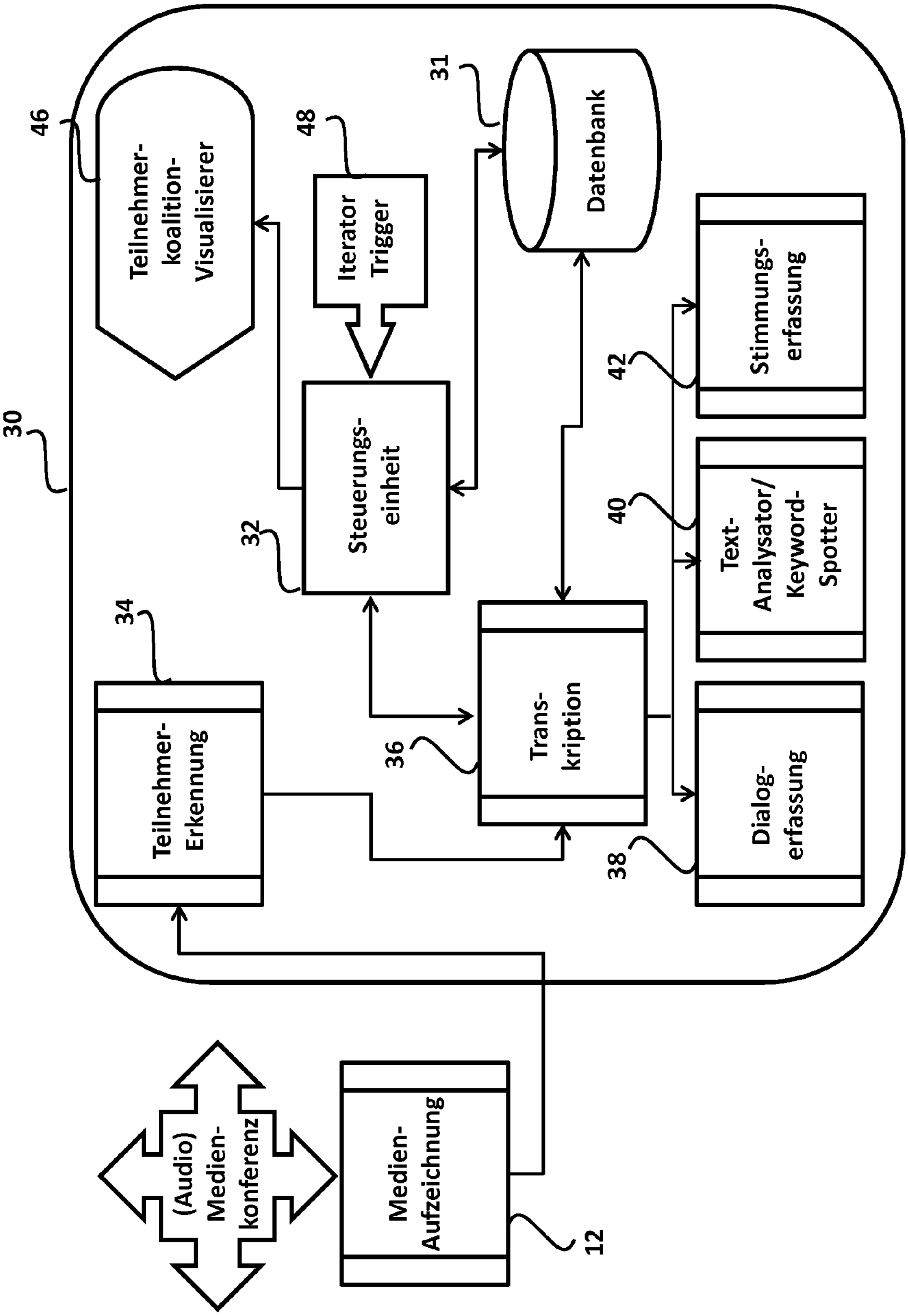
30
46
Teilnehmer-koalition-Visualisierer
48
Iterator Trigger
31
Datenbank
32
Steuerungs-einheit
34
Teilnehmer-Erkennung
36
Trans-kription
38
Dialog-erfassung
40
Text-Analysator/ Keyword-Spotter
42
Stimmungs-erfassung
(Audio) Medien-konferenz
Medien-Aufzeichnung
12

FIG. 2

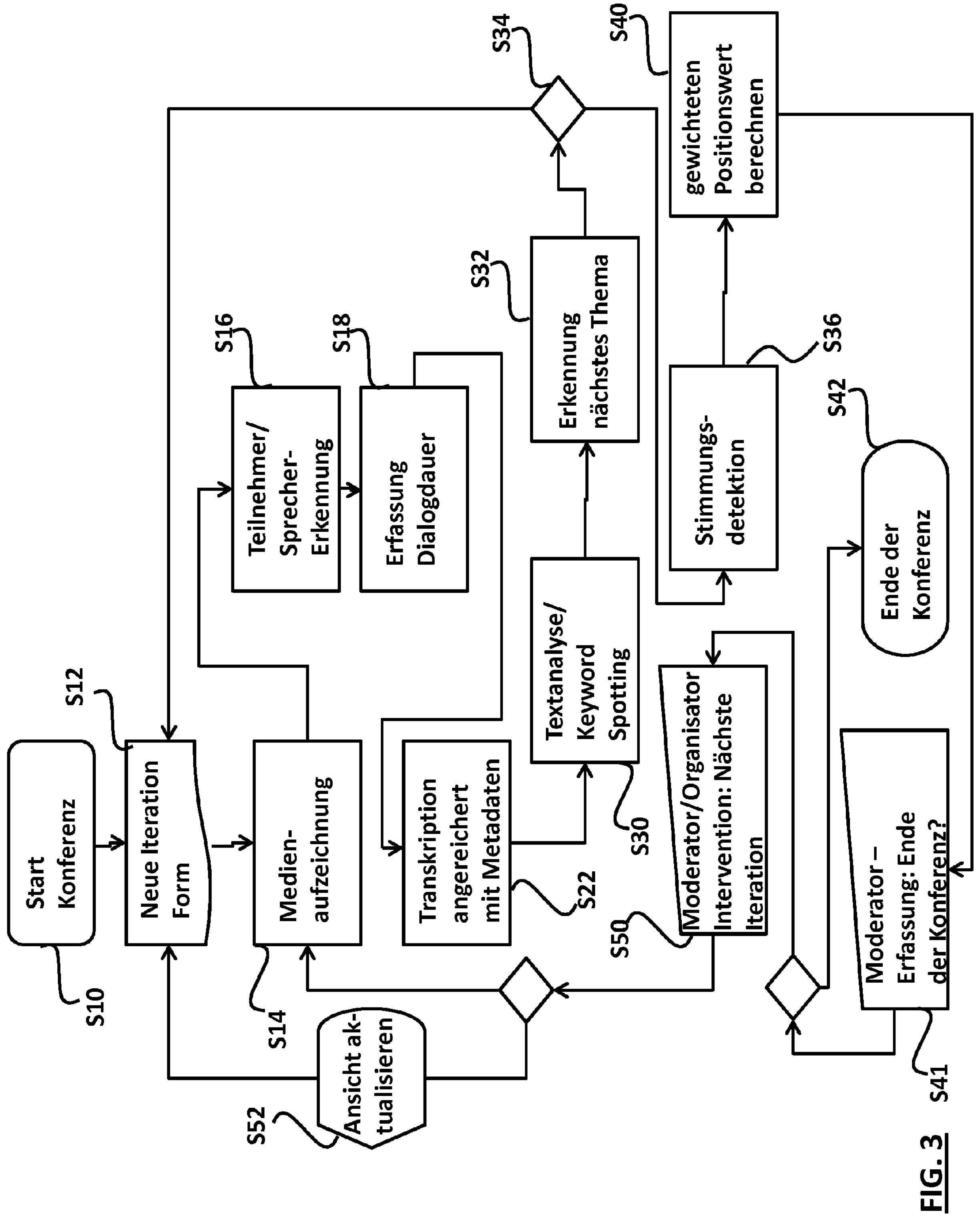
Start Konferenz
S10
Neue Iteration Form
S12
Medien-aufzeichnung
S14
Teilnehmer/ Sprecher-Erkennung
S16
Erfassung Dialogdauer
S18
Transkription angereichert mit Metadaten
S22
Textanalyse/ Keyword Spotting
S30
Erkennung nächstes Thema
S32
S34
Stimmungs-detektion
S36
gewichteten Positionswert berechnen
S40
Moderator – Erfassung: Ende der Konferenz?
S41
Ende der Konferenz
S42
Moderator/Organisator Intervention: Nächste Iteration
S50
Ansicht ak-tualisieren
S52

FIG. 3

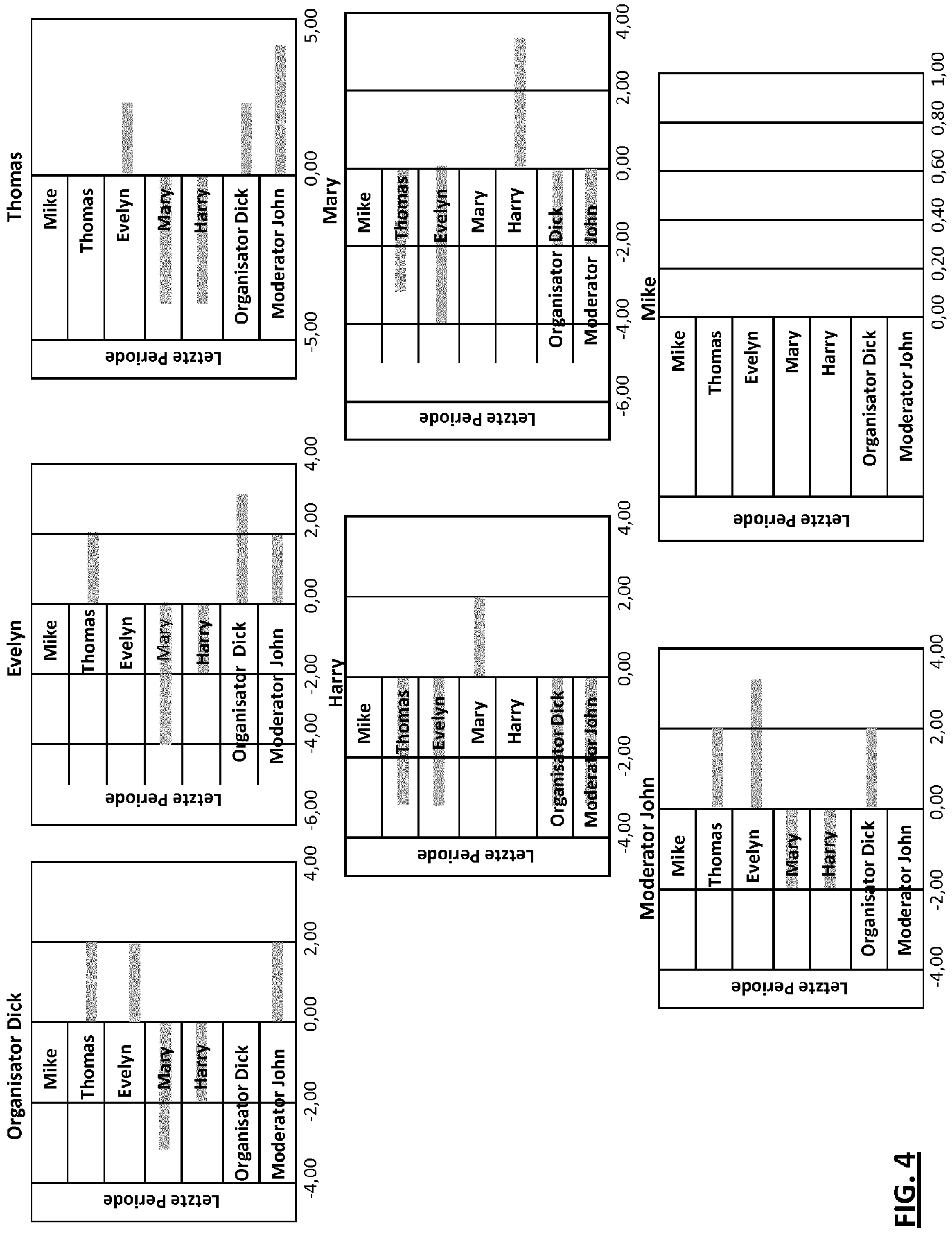
Thomas
Letzte Periode
Mike
Thomas
Evelyn
Mary
Harry
Organisator Dick
Moderator John
-5,00
0,00
5,00
Evelyn
Letzte Periode
-6,00
-4,00
-2,00
0,00
2,00
4,00
Organisator Dick
Letzte Periode
-4,00
-2,00
0,00
2,00
4,00
Mary
Letzte Periode
-6,00
-4,00
-2,00
0,00
2,00
4,00
Harry
Letzte Periode
-4,00
-2,00
0,00
2,00
4,00
Mike
Letzte Periode
0,00
0,20
0,40
0,60
0,80
1,00
Moderator John
Letzte Periode
-4,00
-2,00
0,00
2,00
4,00

FIG. 4

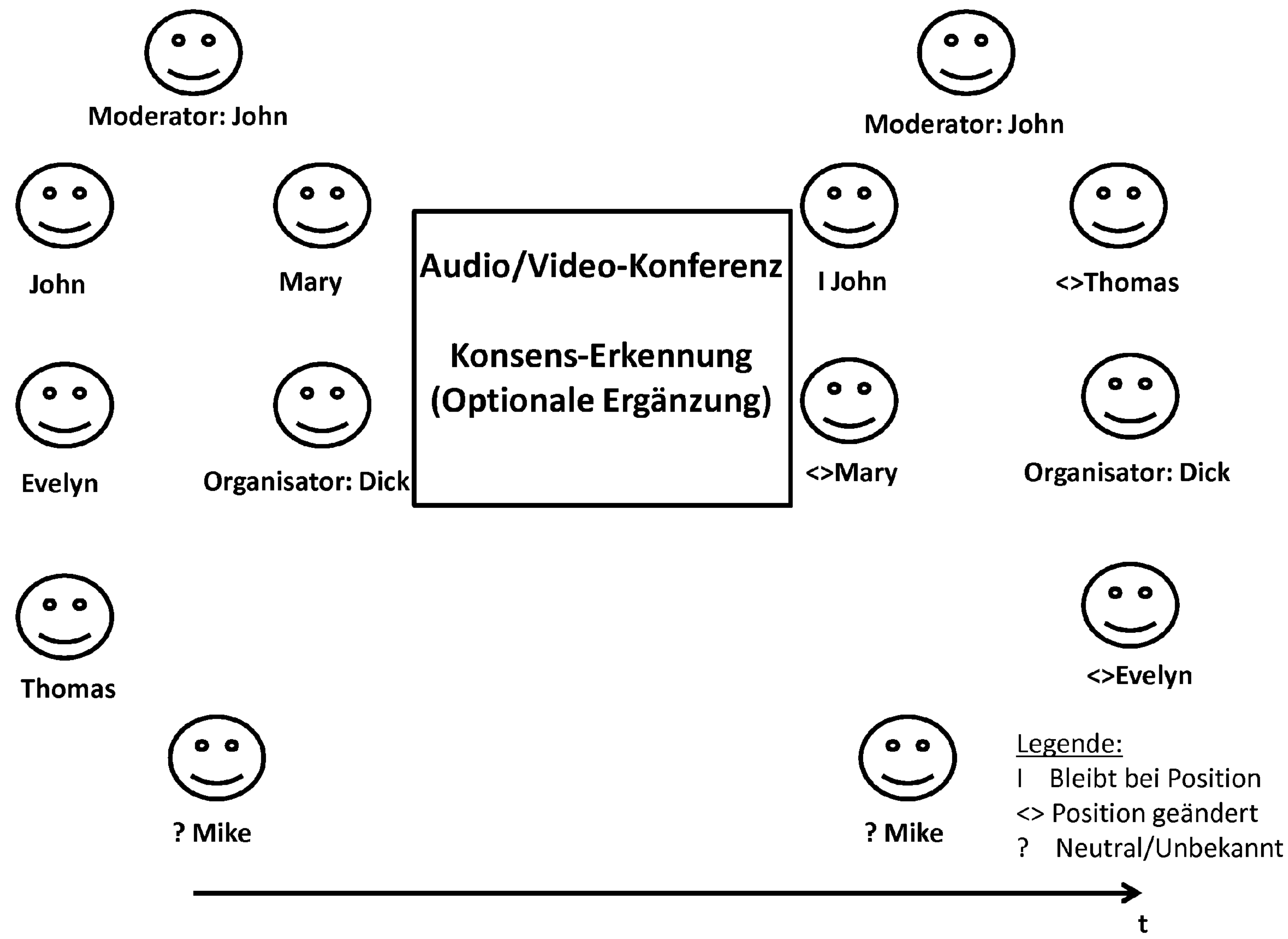
Moderator: John
John
Mary
Evelyn
Organisator: Dick
Thomas
? Mike
Audio/Video-Konferenz
Konsens-Erkennung
(Optionale Ergänzung)
Moderator: John
I John
<>Thomas
<>Mary
Organisator: Dick
<>Evelyn
? Mike
Legende:
I Bleibt bei Position
<> Position geändert
? Neutral/Unbekannt
t

FIG. 5

Europäisches Patentamt
European Patent Office
Office européen des brevets

# EUROPÄISCHER RECHERCHENBERICHT

Nummer der Anmeldung
EP 15 19 7605

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2014/253672 A1 (BANK JUDITH H [US] ET AL) 11. September 2014 (2014-09-11)<br>* Zusammenfassung *<br>* Absatz [0006] - Absatz [0008] *<br>* Absatz [0015] - Absatz [0044] *<br>* Abbildung 1 *<br>----- | 1-10 | INV.<br>G06Q10/10 |
| X,D | US 2012/323575 A1 (GIBBON DAVID C [US] ET AL) 20. Dezember 2012 (2012-12-20)<br>* Zusammenfassung *<br>* Absatz [0011] - Absatz [0067] *<br>----- | 1-10 | |
| A | US 2008/320082 A1 (KUHLKE MATTHEW [US] ET AL) 25. Dezember 2008 (2008-12-25)<br>* Zusammenfassung *<br>* Absatz [0011] - Absatz [0040] *<br>----- | 1-10 | |
| A | US 2007/106724 A1 (GORTI SREENIVASA R [US] ET AL) 10. Mai 2007 (2007-05-10)<br>* Zusammenfassung *<br>* Absatz [0013] - Absatz [0052] *<br>----- | 1-10 | RECHERCHIERTE SACHGEBIETE (IPC)<br>G06Q |

Der vorliegende Recherchenbericht wurde für alle Patentansprüche erstellt

1

| Recherchenort | Abschlußdatum der Recherche | Prüfer |
|---|---|---|
| Den Haag | 21. April 2016 | Bohner, Michael |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.......................................................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 15 19 7605

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-04-2016

| Im Recherchenbericht angeführtes Patentdokument | Datum der Veröffentlichung | Mitglied(er) der Patentfamilie | Datum der Veröffentlichung |
|---|---|---|---|
| US 2014253672 A1 | 11-09-2014 | US 2014253672 A1<br>US 2014258393 A1 | 11-09-2014<br>11-09-2014 |
| US 2012323575 A1 | 20-12-2012 | US 2012323575 A1<br>US 2015235654 A1 | 20-12-2012<br>20-08-2015 |
| US 2008320082 A1 | 25-12-2008 | KEINE | |
| US 2007106724 A1 | 10-05-2007 | US 2007106724 A1<br>WO 2007055833 A2 | 10-05-2007<br>18-05-2007 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1271341 A2
- WO 2013086301 A1
- US 20120323575 A1
- FR 2949894 A1